# EUROPEAN PATENT APPLICATION

(11) **EP 2 428 731 A2**
(43) Date of publication of application: **14.03.2012**
(21) Application number: 10195549.0
(22) Date of filing: 17.12.2010
(51) Int. Cl.: F23L 15/04, F24B 9/00, F24C 15/00, F24H 8/00, F28D 7/00, F28D 21/00

(54) **Combined water heater, air preheater and condensing smoke gas cooler**

(30) Priority: 08.09.2010 SI 201000278
(71) Applicant: Evrovartrade D.O.O., 1282 Sava Pri Litiji (SI)
(72) Inventor: Molka, Zdravko, 1282 Sava pri Litiji (SI)
(74) Representative: Pipan, Marjan

(57) **Abstract**

The subject of the invention is a smoke gas condenser that enables cooling of smoke gases up to dew point and consequently transfer of heat of vaporization and simultaneous pre-heating of input air in heating devices.

The smoke gas condenser of the invention is provided in the interior housing (3) with a coil (1) surrounded by a tube wrapping (2) in a way that the tube wrapping (2) lies in the vicinity of openings (7) in said coil (1) and on the output side of said coil (1) in front of openings (6) there is an orifice (5), and that over the internal housing (3) an external housing (4) is arranged at a distance, said external housing (4) having on its upper surface holes (10) and on its bottom surface a coil (8) for air output.

## Description

The subject of the invention is a smoke gas condenser that enables cooling of smoke gases up to dew point and consequently transfer of heat of vaporization and simultaneous pre-heating of input air in heating devices. The subject of the invention also enables transfer of temperature of smoke gases to heating medium, which provides for a decrease in temperature of smoke gases at the exit from a heating device into a chimney. The invention belongs to class F28D 3/00 of the International Patent Classification.

The technical problem successfully solved by the present smoke gas condenser is a requirement for a further improvement in yield in converting heat energy of output smoke gases when transferred from the stove to the chimney by a discharge of heat energy or lowering the temperature of smoke gases by using a heat exchanger. It should further be possible to simply attach said device to existing or new systems for heating media and to combine it with a heat exchanger as well as to allow a simple cleaning thereof.

The set technical problem that occurs in the existing water heating systems with various fuels - wherein the system comprises an integral system of a specialized burner and heat transfer towards the internal coat in the burner's boiler or an internal heat exchanger system - is a relatively high temperature of smoke gases that appears at the output from the stove and at the input to the chimney. The temperature of smoke gases at the output from the burner or stove can exceed 180°C or even 300°C. It is economical to cool such hot gases or to decrease the output temperature of smoke gases to a temperature between 40°C to 60°C depending on the energy carrier used for heating. After smoke gases exit the burner, they should be cooled and discharged of heat energy, which is transferred to the heating system. The utilization of the fuel is thus better and consequently the consumption of energy carrier lower. The output temperature of smoke gases is decreased by a smoke gas condenser, which is used to additionally preheat the heating medium and the rest can be used for additional preheating of the air that is supplied to the burner and needed for combustion.

In known solutions of this type, in which smoke gases are cooled by a transfer of heat to another medium, e. g. water, the smoke pipe can be a double coated tube with water in the middle. Such solution is described e. g. in document DE 203 07 054 U. A solution of this type does not provide for a better yield. Moreover, a successful transfer of heat or a successful decrease in the temperature of smoke gases is subject to a quite long variant, which cannot be always successfully adapted to the room available.

The solution disclosed in the Swiss application CH 638 884 describes a transfer, in which hot smoke gases flow along two round flat heat transferring means. Due to relatively small surfaces that take the heat this variant lacks a good yield as well and what's more, the intermediate spaces between the transfer means are small, which consequently means that carbon black quickly collects therein and the flow of smoke gasses is diminished. Cleaning of such heat transfer means is a problem.

The patent document US 2004206485 discloses a heat exchanger, in which the exhaust smoke pipe is wrapped in a water containing tubing, which water can be used as previously heated water and connected to the output of consumption water from a boiler in the stove. The solution does not bring good results as to the yield in the discharge of temperature of smoke gases, since the wrapped tubing cools itself as well. The temperature of exhaust smoke gases actually decreases, yet the discharged heat is not utilized to its full potential, it is used to heat the space around the stove, which is most often not desired.

Taking the described variants into account, there is no constructional solution that would sufficiently solve the set technical problem for an efficient conversion of heat energy of exhaust smoke gasses with the best possible yield in their further use or that a successful combination of additional water or air heating would be used in order to decrease the temperature of smoke gases.

The smoke gas condenser of the invention has a double housing and a tube wrapping arranged therein around a smoke coil, so that the tube wrapping lies in the vicinity of openings arranged in the smoke coil and through which smoke gasses are conducted due to a membrane in the smoke coil and the external housing is arranged over the internal housing at a distance, which allows for preheating of the input air for the stove burner.

The invention will now be explained in more detail by way of an embodiment and the belonging figures, representing in:

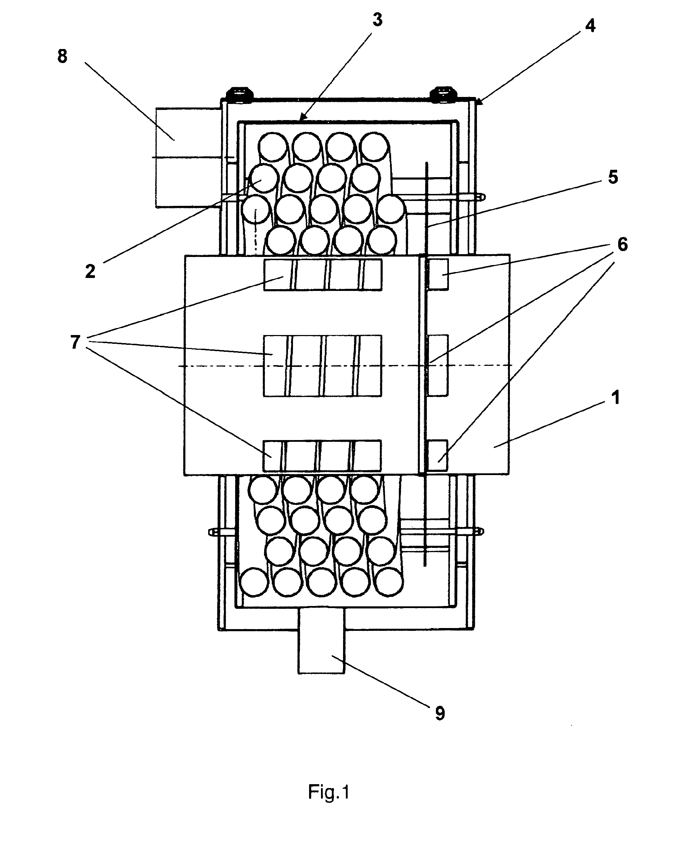

- **Figure 1**: view on the smoke gas condenser of the invention in cross-section in direction A-A;

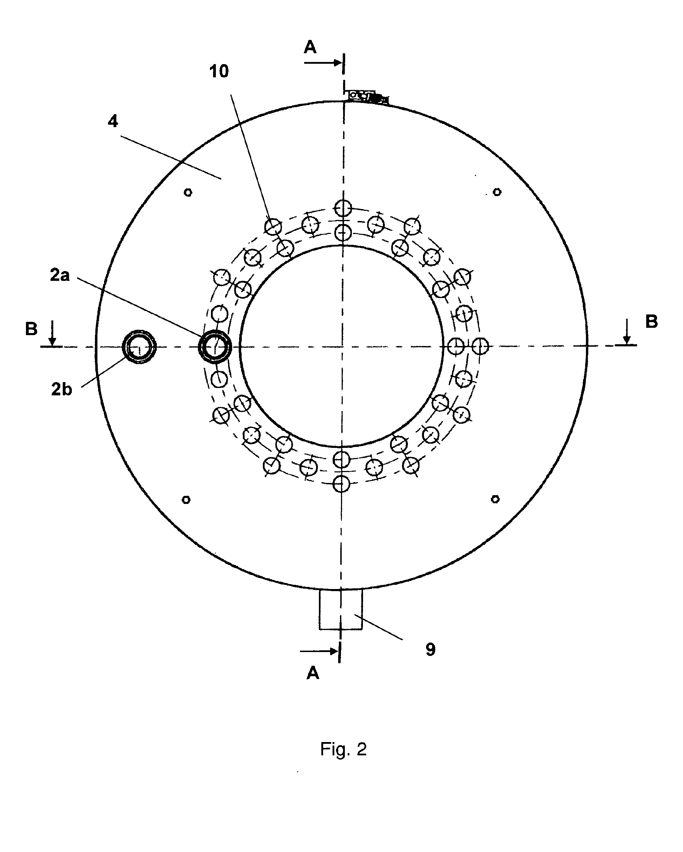

- **Figure 2**: smoke gas condenser of the invention in top view;

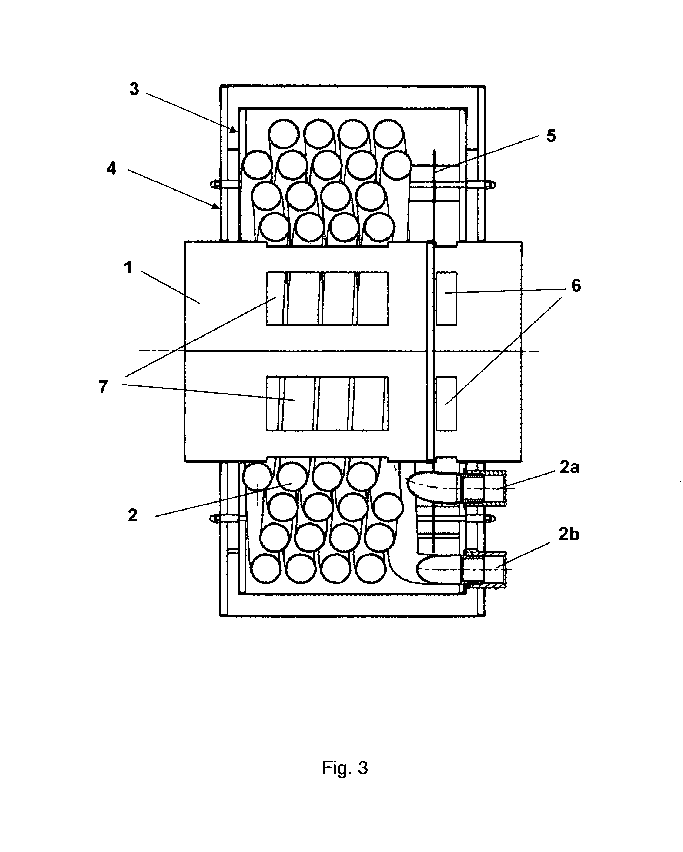

- **Figure 3**: view on the smoke gas condenser of the invention in cross-section in direction B-B;

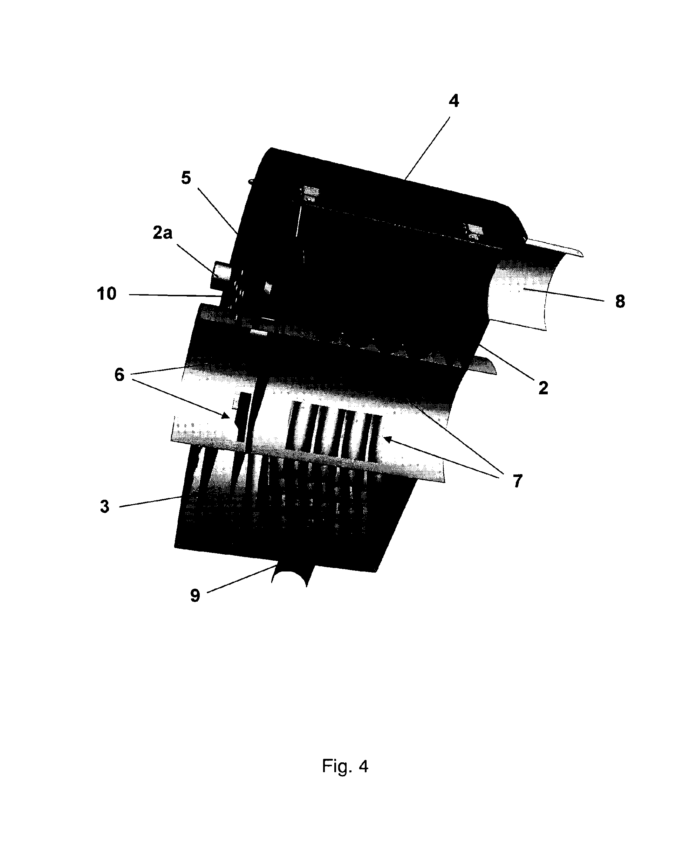

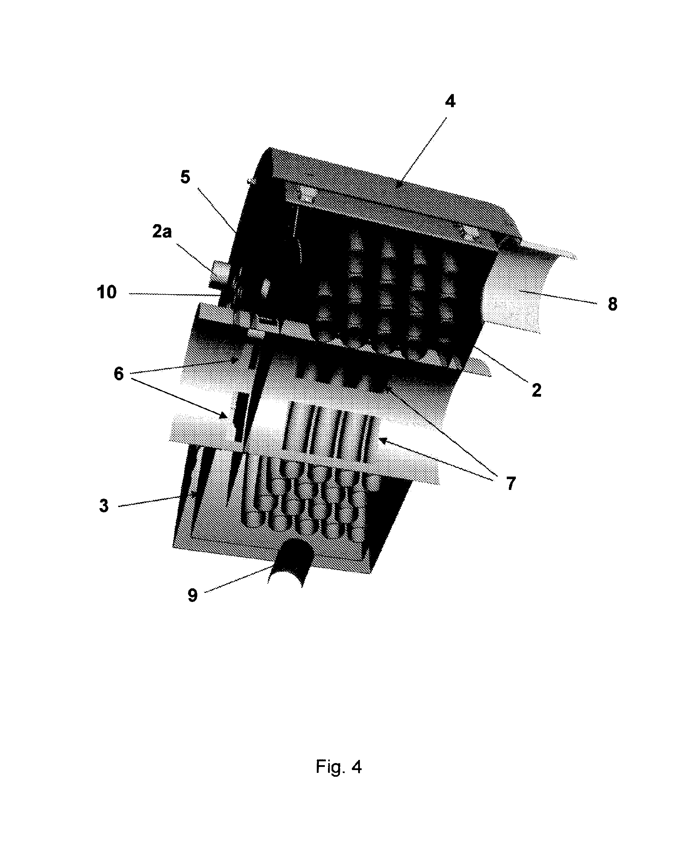

- **Figure 4**: smoke gas condenser of the invention in axonometric view in partial cross-section.

A smoke gas condenser of the invention has a tube wrapping 2 around a coil 1 with connections 2a, 2b, wherein the tube wrapping 2 is surrounded by two housings 3, 4 and the coil 1 has an orifice 5 and openings 6, 7, the external housing 4 has a coil 8 for the output of heated air, wherein from the internal housing 3 there is a tube 9 for a condensate discharge. The upper surface of the external housing 4 is provided with holes 10 for fresh air supply.

In the internal housing 3 there is the coil 1 surrounded by a tube wrapping 2 in a way that said tube wrapping 2 lies in the vicinity of the openings 6 arranged in the coil 1. At the exit side of the coil 1 in front of the openings 6 there is the orifice 5, which prevents a free flow of smoke gases through the coil 1. The smoke gas flow is therefore conducted through the openings 7 of the coil 1 through the tube wrapping 2 to the openings 6 of the coil 1. Hot smoke gases thus heat the medium (water) flowing via connections 2a, 2b through the tube wrapping 2. Herewith cooling of smoke gases and discharge of their heat energy is achieved.

The internal housing 3 is encircled by an external housing 4 with a gap therebetween. Fresh air is supplied into the burner via external housing 4 in a way that fresh air enters the external housing 4 through holes 10 on the upper surface of the external housing 4. The air then travels through the gap between the internal housing 3 and the external housing 4 past the tube wrapping 2 in a way that heated air is led via coils 8 on the bottom surface of the external housing 4, said coils 8 being intended for air exit to the burner of the stove.

The smoke gas condenser of the invention successfully solves the set technical problem. The smoke gas condenser of the invention cools smoke gases up to dew point and therewith discharges heat of vaporization as well. A large surface of the tube wrapper 2, which can even be extended by using ribbed tubes and further air heating between the internal housing 3 and the external housing 4 provide for an efficient cooling of smoke gases. The yield level also depends on the set lowest temperature of the heat medium, which is heated by smoke gases, and the purpose of use thereof. In order to achieve additional heating of an existing device for the production of heated sanitary water and heating of input air to the burner in the stove, the temperature can be decreased up to 40°C, which even improves the yield of the smoke gas condenser of the invention and the yield of the stove. The cooling of smoke gases not only decreases heat losses but also emissions of harmful gases into the environment. Namely when the smoke gas condenser of the invention is operable, the harmful gases contained in smoke gases condensate as well.

## Claims

1. Smoke gas condenser
**characterized in that**
in an internal housing (3) there is arranged a coil (1) surrounded by a tube wrapping (2) in a way that the tube wrapping (2) lies in the vicinity of openings (7) in said coil (1) and on the output side of said coil (1) in front of openings (6) there is an orifice (5), wherein over the internal housing (3) an external housing (4) is arranged at a distance, said external housing (4) having on its upper surface holes (10) and on its bottom surface a coil (8) for air output and on the bottom side outside the housing (3) there is a tube (9) for condensate discharge.

2. Smoke gas condenser as claimed in Claim 1
**characterized in that**
the tube in the tube wrapper (2) is ribbed.
